# EUROPÄISCHE PATENTSCHRIFT

(11) **EP 2 918 445 B1**
(45) Veröffentlichungstag und Bekanntmachung des Hinweises auf die Patenterteilung: **18.09.2019**
(21) Anmeldenummer: 15154118.2
(22) Anmeldetag: 06.02.2015
(51) Int. Cl.: B60P 1/48

(54) **Absetzkipperfahrzeug**
Tipping vehicle
Multibenne

(30) Priorität: 11.02.2014 DE 102014202475
(43) Veröffentlichungstag der Anmeldung: 16.09.2015
(73) Patentinhaber: Franz Xaver Meiller Fahrzeug- und Maschinenfabrik-GmbH & Co KG, 80997 München (DE)
(72) Erfinder: Stieglbauer, Peter, 85570 Markt Schwaben (DE); Kibler, Florian, 81243 München (DE)
(74) Vertreter: Weickmann & Weickmann PartmbB

(56) Entgegenhaltungen:
- EP-A1- 1 600 643
- DE-A1- 3 913 859
- DE-A1-102008 020 777
- DE-U1- 20 201 957

## Beschreibung

Die Erfindung betrifft ein Absetzkipperfahrzeug zum Transport von Wechselbehältern, umfassend
- zwei einen Zwischenraum zwischen sich begrenzende, um eine normalerweise horizontale und in Fahrzeugquerrichtung verlaufende heckseitige Schwenkachse schwenkbare Auslegerarme, die teleskopisch ausfahrbare und einziehbare Endelemente aufweisen, an welchen Tragketten für einen in dem Zwischenraum zwischen den Auslegerarmen aufgenommenen und mittels der Tragketten an den Auslegerarmen angehängten Wechselbehälter befestigt sind, wobei die Auslegerarme in einer Behälterwechselbetriebsart des Absetzkipperfahrzeugs um die Schwenkachse nach hinten und nach vorne verschwenkbar sind, um einen auf dem Absetzkipperfahrzeug stehenden Wechselbehälter über das Fahrzeugheck hinweg am Boden abzusetzen bzw. einen am Boden abgesetzten Wechselbehälter über das Fahrzeugheck hinweg auf das Absetzkipperfahrzeug aufzunehmen,
- wenigstens einen zwischen einer inaktiven Stellung und einer Fangstellung um eine zur heckseitigen Schwenkachse der Auslegerarme parallele, vorzugsweise koaxiale Klappachse schwenkbaren Kipphaken, der in einer Kippbetriebsart des Absetzkipperfahrzeugs in seiner Fangstellung positioniert ist oder wird - und dazu eingerichtet ist, einen hinteren Kipplagerbolzen eines an den Endelementen der Auslegerarme hängenden und durch Verschwenken der Auslegerarme nach hinten in eine Kippstellung zu bewegenden Wechselbehälters in Eingriff zu nehmen und so den Wechselbehälter bei fortgesetztem Schwenken der Auslegerarme in die Kippstellung zu zwingen,
- wenigstens einen hydraulischen Schwenkzylinder als Schwenkantriebsmittel für die Auslegerarme,
- hydraulische Teleskopierzylinder zum teleskopischen Ausfahren und Einziehen der Endelemente der Auslegerarme, wobei die Teleskopierzylinder an einem ihnen zugeordneten Hydraulikkreis zur Versorgung mit Hydraulikfluid angeschlossen sind,
- Antriebsmittel zum Schwenken des Kipphakens um die Klappachse,
- eine Steuereinrichtung zur Steuerung des wenigstens einen hydraulischen Schwenkzylinders, der hydraulischen Teleskopierzylinder und der Antriebsmittel zum Schwenken des Kipphakens, und
- eine von einer Bedienperson zu betätigende Bedienvorrichtung zur Einstellung der gewünschten Betriebsart des Absetzkippers und zur Abgabe von Steuerbefehlen an die Steuereinrichtung.

Derartige Absetzkipperfahrzeuge, siehe z.B. DE 20201957 U1, sind in diversen Ausgestaltungen bekannt und werden sehr häufig zum Transport von Bauschutt und sonstigem schüttfähigen Material eingesetzt. Dabei wird das Ladegut in üblicherweise standardisierten Wechselbehältern transportiert.

In seiner Transportstellung steht der Wechselbehälter auf der Ladebrücke des Absetzkipperfahrzeugs und ist dort normalerweise gegen Verrutschen und unbeabsichtigtes Abheben gesichert. Die Auslegerarme des Absetzkipperfahrzeugs sind in der Transportstellung schräg nach vorn geschwenkt und an ihren Endelementen mit den Tragketten für den Wechselbehälter verbunden.

Zum Absetzen des Wechselbehälters auf den Boden wird normalerweise zunächst das Absetzkipperfahrzeug durch Ausfahren von heckseitigen Stützfüßen am Boden stabilisiert. Ferner ist sicherzustellen, dass der Kipphaken am Heck des Absetzkipperfahrzeugs in seiner inaktiven Stellung ist. Sofern aktivierbare Ladungssicherungselemente vorhanden sind, ist ferner dafür Sorge zu tragen, dass der Wechselbehälter aus der Ladungssicherung freigegeben ist. Dann kann schließlich das Verschwenken der Auslegerarme um ihre heckseitige Schwenkachse nach hinten erfolgen, wobei der Wechselbehälter an den Tragketten oder Tragseilen hängend über das Heck hinweg von den Auslegerarmen bewegt wird. Aufgrund der Aufhängung des Wechselbehälters tariert sich der Wechselbehälter unter der Wirkung der Schwerkraft stets in einer Horizontalausrichtung während des Schwenkbewegungsablaufs der Auslegerarme aus, so dass er schließlich in dieser Horizontalausrichtung am Boden heckseitig des Absetzkipperfahrzeugs abgesetzt werden kann.

Das Aufladen eines Wechselbehälters erfolgt in umgekehrter Abfolge der vorstehend beschriebenen Schritte.

Absetzkipper der hier betrachteten Art können jedoch wahlweise auch in einer Kippbetriebsart arbeiten, wobei ein zunächst auf der Ladebrücke des Absetzkipperfahrzeugs in Transportstellung stehender Wechselbehälter nach Stabilisierung des Absetzkipperfahrzeugs durch Ausfahren der Stützfüße und nach etwaiger Freigabe durch Ladungssicherungselemente von den Auslegerarmen bei deren Schwenkbewegung nach hinten angehoben wird. Abweichend von der Behälterwechselbetriebsart des Absetzens oder des Aufladens wird bei Einleitung der Kippbetriebsart der Kipphaken in seine Fangstellung bewegt, so dass er einen in Fahrzeuglängsrichtung hinteren Kipplagerbolzen des Wechselbehälters in Eingriff nehmen kann. Sobald die Ineingriffnahme des Kipplagerbolzens durch den Kipphaken erfolgt ist, kann sich der Wechselbehälter bei fortgesetztem Verschwenken der Auslegerarme nicht mehr in Horizontalposition ausrichten, sondern wird in eine schräge Kippstellung gezwungen, so dass sein Ladegut heckseitig des Absetzkipperfahrzeugs aus dem Wechselbehälter rutschen kann.

Damit die Tragketten oder -seile während des Bewegungsablaufs des Wechselbehälters beim Übergang in die Kippstellung gespannt sind, kann die Bedienungsperson mittels der Bedienvorrichtung die Steuereinrichtung dazu veranlassen, die Endelemente der Auslegerarme teleskopisch um einen kleinen Betrag auszufahren. Dabei ist es in der Vergangenheit häufiger vorgekommen, dass ungeübte Bedienungspersonen die Endelemente der Auslegerarme zu stark haben ausfahren lassen, so dass es zu einer übermäßigen Kraftbeanspruchung an dem Kipplagerbolzen des Wechselbehälters und/oder an dem damit in Eingriff gebrachten Kipphaken mit der Folge von Beschädigungen dieser Komponenten gekommen ist. Falls es dabei zur Lösung der Ineingriffnahme zwischen Kipplagerbolzen und Kipphaken kommt, besteht überdies die Gefahr, dass der Wechselbehälter unkontrolliert und raumgreifend an den Auslegerarmen schwingt, was ein erhöhtes Unfallrisiko bedeutet.

Der Erfindung liegt die Aufgabe zugrunde, ein gattungsgemäßes Absetzkipperfahrzeug bereitzustellen, welches ein höheres Maß an Betriebssicherheit in der Kippbetriebsart bietet, ohne den Bedienkomfort für die Bedienungsperson einzuschränken.

Ausgehend von einem Absetzkipperfahrzeug mit den eingangs genannten Merkmalen wird zur Lösung dieser Aufgabe erfindungsgemäß vorgeschlagen, dass in dem den Teleskopierzylindern zugeordneten Hydraulikkreis eine mittels der Steuereinrichtung zu aktivierende Druckbegrenzungseinrichtung, vorzugsweise Druckbegrenzungsventilanordnung, vorgesehen ist, die zur Begrenzung des hydraulischen Maximaldrucks in den Teleskopierzylindern auf einen Wert in der Kippbetriebsart des Absetzkipperfahrzeugs eingerichtet ist, der gegenüber dem in der Behälterwechselbetriebsart erreichbaren Wert des Maximalsdrucks in den Teleskopierzylindern reduziert ist.

Die Begrenzung des Hydraulikdrucks in den Teleskopierzylindern bei dem teleskopischen Ausfahren der Endelemente der Auslegerarme führt dazu, dass auch eine Ausschubkraftbegrenzung stattfindet, so dass auch die auf den Kipplagerbolzen und den Kipphaken wirkende Kraft einen maximalen Wert beim Ausfahren der Endelemente der Auslegerarme in der Kippbetriebsart nicht überschreitet. Das Maß der Druckbegrenzung ist so gewählt, dass eine Beschädigung des Kipplagerbolzens des Wechselbehälters und des Kipphakens beim Spannen der Tragketten mittels der Teleskopierzylinder in der Kippbetriebsart sicher vermieden wird.

Damit ist nicht nur die Beschädigungsgefahr für den Kipplagerbolzen und den Kipphaken insoweit gebannt, sondern auch die Gefahr des sich unkontrolliert lösenden Eingriffs zwischen Kipplagerbolzen und Kipphaken während eines Kippvorgangs. Damit wird auch verhindert, dass der Wechselbehälter in der Kippbetriebsart plötzlich unkontrolliert an den Auslegerarmen zu schwingen beginnt.

Bei der Druckbegrenzungseinrichtung handelt es sich vorzugsweise um Druckbegrenzungsventile oder Überlastventile im Hydraulikkreis der Teleskopierzylinder, wobei diese Hydraulikventile mittels der Steuereinrichtung aktivierbar sind. Einzelheiten zur Realisierung der Druckbegrenzung im Hydraulikkreis der Teleskopierzylinder können dem Fachmann überlassen bleiben.

Es hat sich in der Praxis gezeigt, dass eine Reduzierung des Maximaldrucks in den Teleskopierzylindern auf ca. 90 bar eine gute Lösung darstellt, die die vorstehend erwähnten Sicherheitsmerkmale bietet, ohne den Bedienkomfort des Absetzkipperfahrzeugs in der Kippbetriebsart zu vermindern.

Vorzugsweise ist die Steuereinrichtung dazu programmiert, die Druckbegrenzungseinrichtung nur in der Kippbetriebsart im aktivierten Zustand zu halten, so dass in der Behälterwechselbetriebsart, sei es beim Absetzen - oder beim Aufladen eines Wechselbehälters, erheblich größere hydraulische Druckreserven für die Teleskopierzylinder beim Ausfahren und Einziehen der Endelemente der Auslegerarme zur Verfügung stehen, z. B. Maximaldrücke von ca. 250 bar.

Da die Steuereinrichtung die verschiedenen Betriebsarten des Absetzkipperfahrzeuges jeweils steuert und daher weiß, wann die Kippbetriebsart gewählt ist, bedarf es grundsätzlich keiner technisch-sensorischen Überwachung der jeweils eingestellten Betriebsart.

Gemäß einer Variante der Erfindung ist jedoch eine die Stellung des Kipphakens überwachende und mit der Steuereinrichtung kommunizierende Sensoreinrichtung am Absetzkipperfahrzeug vorgesehen, wobei die Steuereinrichtung die Druckbegrenzungseinrichtung im aktivierten Zustand hält, solange die Sensoreinrichtung signalisiert, dass der Kipphaken in seiner Fangstellung ist. Es ist nämlich ein Hauptmerkmal der Kippbetriebsart, dass der Kipphaken in seine Fangstellung überführt worden ist.

Weiterhin können Betriebsartenanzeigemittel insbesondere an der Bedienvorrichtung vorgesehen und dazu eingerichtet sein, die jeweils gewählte Betriebsart des Absetzkippers akustisch, optisch oder/und haptisch an der Bedienvorrichtung zu signalisieren.

Bei der Bedienvorrichtung kann es sich z. B. um eine Funkfernbedienung handeln, die Funkbefehle an einen Empfänger der Steuereinrichtung nach Maßgaben der Betätigung von Bedienelementen an der Bedienvorrichtung aussenden kann, wobei die Steuereinrichtung die empfangenen Funksignale auswerten und zur Steuerung betreffender Betriebsfunktionen umsetzen kann.

Die Erfindung wird nachstehend unter Bezugnahme auf die Figuren erläutert.
- Fig. 1: zeigt ein Absetzkipperfahrzeug mit darauf in Transportstellung aufgenommenem Wechselbehälter in einer Seitenansicht.
- Fig. 2: zeigt den Wechselbehälter in einer perspektivischen Darstellung mit einem schematisch und nur teilweise dargestellten Kipphaken des Absetzkipperfahrzeugs, der einen Kipplagerbolzen des Wechselbehälters in Eingriff genommen hat.
- Fig. 3: zeigt das Absetzkipperfahrzeug aus Fig. 1 in der Kippbetriebsart mit in Kippstellung befindlichem Wechselbehälter.

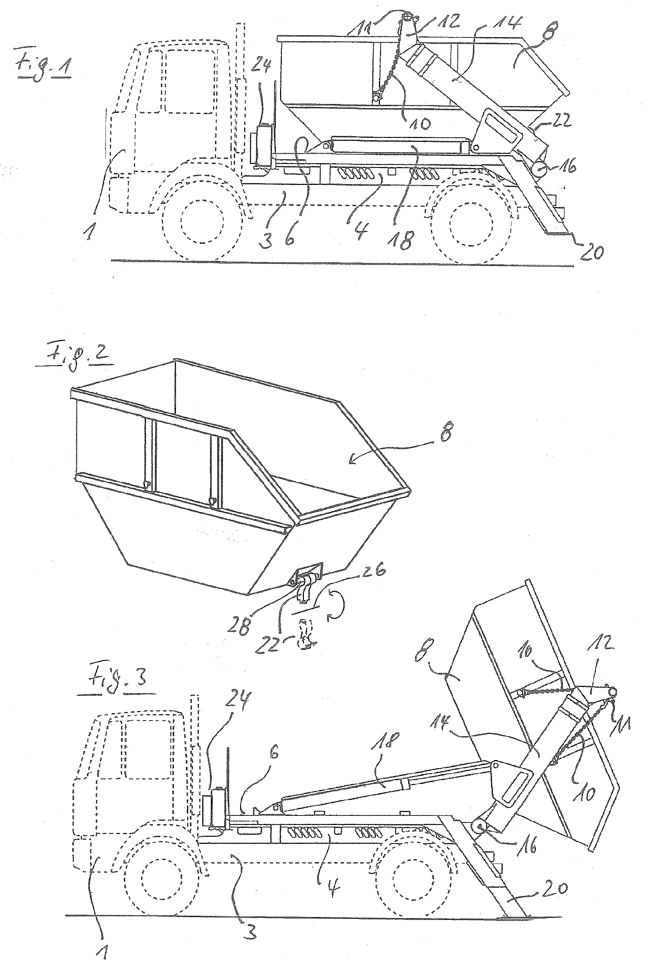

In Fig. 1 und Fig. 3 ist das Basisfahrzeug 1 mit gestrichelten Linien dargestellt. Es weist einen Grundrahmen 3 auf, auf dem ein Hilfsrahmen 4 des Absetzkipperaufbaus befestigt ist. Der Hilfsrahmen 4 trägt eine Ladebrücke 6, auf der in Fig. 1 der Wechselbehälter 8 in seiner Transportstellung abgestellt ist. Der Wechselbehälter 8 ist über Tragketten 10 mit den Endelementen 12 der Auslegerarme 14 verbunden. Die Auslegerarme 14 sind schwenkbeweglich um eine heckseitige Schwenkachse 16 gelagert, welche in Fahrzeugquerrichtung verläuft und normalerweise horizontal liegt.

Es sind zwei Auslegerarme 14 vorhanden, die in der Seitenansicht gemäß Fig. 1 und Fig. 3 hintereinander liegen, so dass jeweils nur ein Auslegerarm 14 erkennbar ist. Der Wechselbehälter 8 ist in einem Zwischenraum zwischen den Auslegerarmen 14 aufgenommen und kann durch Verschwenken der Auslegerarme 14 um die Schwenkachse 16 nach hinten angehoben und in einer Absetzbetriebsart heckseitig des Absetzkipperfahrzeugs 1 am Boden abgesetzt werden. Jeder der beiden Auslegerarme 14 hat als Schwenkantrieb einen eigenen doppelt wirkenden hydraulischen Schwenkzylinder 18, der im Beispielsfall mit seinem Kolbenstangenende an dem Auslegerarm 14 - und mit seinem Zylindergehäuseende an der Ladebrücke 6 angelenkt ist. In der Transportstellung gemäß Fig. 1 liegen die hydraulischen Schwenkzylinder 18 im Wesentlichen horizontal ausgerichtet an der Ladebrücke 6.

Vor dem Einleiten eines Behälterabsetzvorgangs werden noch Stützfüße 20 am Heck des Absetzkipperfahrzeugs zum Boden ausgefahren, um das Absetzkipperfahrzeug zu stabilisieren. Für den Absetzvorgang ist ferner ein Kipphaken 22 in seine inaktive Stellung um eine zur Schwenkachse 16 koaxiale Klappachse nach unten zu verschwenken, so dass er keine Störkontur für den Wechselbehälter beim Absetzvorgang darstellen kann.

Zum Aufladen eines Wechselbehälters 8 auf die Ladebrücke des Absetzkipperfahrzeugs werden die Auslegerarme 14 aus einer nach hinten gerichteten Schwenkstellung heraus wieder nach vorne verschwenkt, um den an den Tragketten 10 daran hängenden Wechselbehälter 8 wieder in den Zustand gemäß Fig. 1 zu bringen.

Die vorliegende Erfindung befasst sich mit einer Verbesserung der Arbeitsweise des Absetzkipperfahrzeugs in der Kippbetriebsart.

Nach Auswahl der Kippbetriebsart durch Betätigen betreffender Bedienelemente oder ggf. durch Sprachsteuerung an der Bedienvorrichtung und nach Start der Kippbetriebsart sorgt die Steuereinrichtung 24 dafür, dass der Kipphaken 22 aus einer in Fig. 2 schematisch mit gestrichelten Linien dargestellten inaktiven Stellung in eine mit durchgezogenen Linien dargestellte Fangstellung um die Klappachse 26 verschwenkt wird, so dass er einen hinteren Kipplagerbolzen 28 des Wechselbehälters 8 verriegelnd in Eingriff nehmen kann, wie dies in Fig. 2 angedeutet ist. Wird dann nach Ausfahren der Stützfüße 20 zum Boden der Wechselbehälter 8 durch Verschwenken der Auslegerarme 14 um ihre Schwenkachse 16 nach hinten bewegt, so hindert der mit dem Kipplagerbolzen 28 in Eingriff gebrachte Kipphaken den Wechselbehälter 8 daran, sich waagerecht an der Kettenaufhängung 11 unter der Wirkung der Schwerkraft auszurichten, so dass es bei fortgesetztem Verschwenken der Auslegerarme 14 nach hinten zu einer Schrägstellung des an seinem Kipplagerbolzen 28 vom Kipphaken 22 festgehaltenen Wechselbehälters 8 in der in Fig. 3 gezeigten Weise kommt. Der Wechselbehälter 8 hat dabei eine Kippstellung eingenommen, in der etwaiges Ladegut über die hintere Entladekante des Wechselbehälters 8 hinweg heckseitig des Absetzkipperfahrzeugs 1 auf den Boden abrutschen kann.

Die Endelemente 12 der Auslegerarme 14 sind mittels (nicht gezeigter) doppelt wirkender hydraulischer Teleskopierzylinder teleskopisch ausschiebbar und einfahrbar, und zwar in Längsrichtung der Auslegerarme 14. Diese Teleskopiermöglichkeit kann dazu genutzt werden, die Tragketten 10 oder ggf. alternativ dazu Tragseile für den in Fig. 3 gezeigten Kippvorgang unter Spannung zu setzen bzw. zu halten. Erfindungsgemäß kann durch Begrenzung des Maximaldrucks in den ausschiebenden Teleskopierzylindern automatisch verhindert werden, dass eine zu große Kraft den Kipplagerbolzen 28 und den damit in Eingriff stehenden Kipphaken 22 in der Kippbetriebsart beschädigen kann.

Die Druckbegrenzungseinrichtung ist in einer Steuerventilanordnung der Steuereinrichtung 24 integriert. Einzelheiten der hydraulischen Verschaltung zur Verwirklichung der Erfindung können dem Fachmann überlassen bleiben.

## Patentansprüche

1. Absetzkipperfahrzeug zum Transport von Wechselbehältern (8), umfassend
- zwei einen Zwischenraum zwischen sich begrenzende, um eine normalerweise horizontale und in Fahrzeugquerrichtung verlaufende heckseitige Schwenkachse (16) schwenkbare Auslegerarme (14), die teleskopisch ausfahrbare und einziehbare Endelemente (12) aufweisen, an welchen Tragketten (10) für einen in dem Zwischenraum zwischen den Auslegerarmen (14) aufgenommenen und mittels der Tragketten (10) an den Auslegerarmen (14) angehängten Wechselbehälter (8) befestigt sind, wobei die Auslegerarme (14) in einer Behälterwechselbetriebsart des Absetzkipperfahrzeugs um die Schwenkachse (16) nach hinten und nach vorne verschwenkbar sind, um einen auf dem Absetzkipperfahrzeug stehenden Wechselbehälter (8) über das Fahrzeugheck hinweg am Boden abzusetzen bzw. einen am Boden abgesetzten Wechselbehälter (8) über das Fahrzeugheck hinweg auf das Absetzkipperfahrzeug aufzunehmen,
- wenigstens einen zwischen einer inaktiven Stellung und einer Fangstellung um eine zur heckseitigen Schwenkachse (16) der Auslegerarme parallele, vorzugsweise koaxiale Klappachse (26) schwenkbaren Kipphaken (22), der in einer Kippbetriebsart des Absetzkipperfahrzeugs in seiner Fangstellung positioniert ist oder wird - und dazu eingerichtet ist, einen hinteren Kipplagerbolzen (28) eines an den Endelementen (12) der Auslegerarme (14) hängenden und durch Verschwenken der Auslegerarme (14) nach hinten in eine Kippstellung zu bewegenden Wechselbehälters (8) in Eingriff zu nehmen und so den Wechselbehälter (8) bei fortgesetztem Schwenken der Auslegerarme (14) in die Kippstellung zu zwingen,
- wenigstens einen hydraulischen Schwenkzylinder (18) als Schwenkantriebsmittel für die Auslegerarme (14),
- hydraulische Teleskopierzylinder zum teleskopischen Ausfahren und Einziehen der Endelemente (12) der Auslegerarme (14), wobei die Teleskopierzylinder an einem ihnen zugeordneten Hydraulikkreis zur Versorgung mit Hydraulikfluid angeschlossen sind,
- Antriebsmittel zum Schwenken des Kipphakens (22) um die Klappachse (26),
- eine Steuereinrichtung (24) zur Steuerung des wenigstens einen hydraulischen Schwenkzylinders (18), der hydraulischen Teleskopierzylinder und der Antriebsmittel zum Schwenken des Kipphakens (22), und
- eine von einer Bedienperson zu betätigende Bedienvorrichtung zur Einstellung der gewünschten Betriebsart des Absetzkippers und zur Abgabe von Steuerbefehlen an die Steuereinrichtung (24),
**dadurch gekennzeichnet,**
**dass** in dem den Teleskopierzylindern zugeordneten Hydraulikkreis eine mittels der Steuereinrichtung (24) zu aktivierende Druckbegrenzungseinrichtung, vorzugsweise Druckbegrenzungsventilanordnung, vorgesehen ist, die zur Begrenzung des hydraulischen Maximaldrucks in den Teleskopierzylindern auf einen Wert in der Kippbetriebsart des Absetzkipperfahrzeugs eingerichtet ist, der gegenüber dem in der Behälterwechselbetriebsart erreichbaren Wert des Maximaldrucks in den Teleskopierzylindern reduziert ist.

2. Absetzkipperfahrzeug nach Anspruch 1, **dadurch gekennzeichnet, dass** die Druckbegrenzungseinrichtung zur Begrenzung des hydraulischen Maximaldrucks in den Teleskopierzylindern auf einen vorbestimmten Wert aus dem Bereich von 70 bar bis 100 bar, vorzugsweise auf 90 bar mit einer Toleranz von +/- 5 bar in der Kippbetriebsart des Absetzkipperfahrzeugs eingerichtet ist.

3. Absetzkipperfahrzeug nach Anspruch 1 oder 2, **dadurch gekennzeichnet, dass** die Steuereinrichtung die Druckbegrenzungseinrichtung nur in der Kippbetriebsart im aktivierten Zustand hält.

4. Absetzkipperfahrzeug nach einem der vorhergehenden Ansprüche, **dadurch gekennzeichnet, dass** eine die Stellung des Kipphakens überwachende und mit der Steuereinrichtung kommunizierende Sensoreinrichtung am Absetzkipperfahrzeug vorgesehen ist, wobei die Steuereinrichtung dazu eingerichtet ist, die Druckbegrenzungseinrichtung im aktivierten Zustand zu halten, solange die Sensoreinrichtung signalisiert, dass der Kipphaken (22) in seiner Fangstellung ist.

5. Absetzkipperfahrzeug nach einem der vorhergehenden Ansprüche, **dadurch gekennzeichnet, dass** Betriebsartenanzeigemittel vorgesehen und dazu eingerichtet sind, die jeweils gewählte Betriebsart des Absetzkippers akustisch, optisch oder/und haptisch an der Bedienvorrichtung zu signalisieren.

## Claims

1. Skip handler for transporting skips (8), comprising
- two pivotable extension arms (14) limiting an intermediate space therebetween, extending about a normally horizontal pivot axis (16) running in the transverse direction of the vehicle, said extension arms having telescopically extendable and retractable end elements (12) to which carrying chains (10) are fastened for a skip (8) which is picked up in the intermediate space between the extension arms (14) and is attached to said extension arms (14) by means of the carrying chains (10), wherein, in a skip swapping mode of the skip handler, the extension arms (14) are pivotable backwards and forwards about the pivot axis (16) in order to set down a skip (8) which is resting on the skip handler on the ground beyond the rear of the vehicle or to lift up a skip (8) which has been set down on the ground beyond the rear of the vehicle onto the skip handler,
- at least one tipping hook (22), pivotable between an inactive position and a capturing position about a hinged axis (26) parallel to, preferably coaxial with the rear side pivot axis (16) of the extension arms, which tipping hook, in a tipping mode of the skip handler, is or will be positioned in its capturing position - and is designed to engage a rear tipping bearing bolt (28) of a skip (8), which is suspended on the end elements (12) of the extension arms (14) and is to be moved backwards into a tipping position by pivoting the extension arms (14), and thus to force the skip (8) into the tipping position on continued pivoting of the extension arms (14),
- at least one hydraulic pivoting cylinder (18) as a pivot drive means for the extension arms (14),
- hydraulic telescopic cylinders for telescopically extending and retracting the end elements (12) of the extension arms (14), wherein the telescopic cylinders are connected to an associated hydraulic circuit for supplying them with hydraulic fluid,
- drive means for pivoting the tipping hook (22) about the hinged axis (26),
- a control device (24) for controlling the at least one hydraulic pivoting cylinder (18), the hydraulic telescopic cylinders and the drive means for pivoting the tipping hook (22), and
- operator controls to be activated by an operator for setting the desired operating mode of the skip loader and for transmitting control commands to the control device (24),
**characterised in that**,
in the hydraulic circuit associated with the telescopic cylinders, a pressure limiting device, preferably a pressure relief valve arrangement, to be activated by means of the control device (24), is provided which is designed to limit the maximum hydraulic pressure in the telescopic cylinders to a value in the tipping mode of the skip handler that is reduced compared to the value of the maximum pressure in the telescopic cylinders that is achievable in the skip swapping mode.

2. Skip handler according to claim 1, **characterised in that** the pressure limiting device is designed for limiting the maximum hydraulic pressure in the telescopic cylinders to a predetermined value ranging between 70 bar and 100 bar, preferably to 90 bar with a tolerance of +/- 5 bar in the tipping mode of the skip handler.

3. Skip handler according to claim 1 or 2, **characterised in that** the control device only keeps the pressure limiting device in the activated state in the tipping mode.

4. Skip handler according to one of the preceding claims, **characterised in that** a sensor device monitoring the position of the tipping hook and communicating with the control device is provided on the skip handler, wherein the control device is designed to keep the pressure limiting device in the activated state as long as the sensor device signals that the tipping hook (22) is in its capturing position.

5. Skip handler according to one of the preceding claims, **characterised in that** operating mode display means are provided and designed to signal each selected operating mode of the skip loader acoustically, optically or/and haptically on the operator controls.

## Revendications

1. Véhicule multibenne destiné à transporter des conteneurs interchangeables (8), comportant
- deux bras (14) délimitant entre eux un espace intermédiaire et pouvant pivoter autour d'un axe de pivotement (16) arrière normalement horizontal et s'étendant dans la direction transversale du véhicule, lesquels bras présentent des éléments d'extrémité (12) pouvant être déployés et rentrés de manière télescopique, au niveau desquels sont fixées des chaînes porteuses (10) pour un conteneur interchangeable (8) logé dans l'espace intermédiaire entre les bras (14) et suspendu aux bras (14) au moyen des chaînes porteuses (10), dans lequel les bras (14) sont amenés à pivoter vers l'arrière et vers l'avant autour de l'axe de pivotement (16) dans un mode changement de conteneur du véhicule multibenne, afin de déposer un conteneur interchangeable (8) reposant sur le véhicule multibenne au-delà de l'arrière du véhicule sur le sol ou de loger un conteneur interchangeable (8) déposé sur le sol au-delà de l'arrière du véhicule sur le véhicule multibenne,
- au moins un crochet basculant (22) qui peut pivoter entre une position inactive et une position de capture autour d'un axe de rabattement (26) de préférence coaxial, parallèle à l'axe de pivotement (16) arrière des bras, et qui est ou devient positionné dans sa position de capture lorsque le véhicule multibenne se trouve dans un mode basculement - et qui est conçu pour entrer en contact avec un axe de palier à bascule arrière (28) d'un conteneur interchangeable (8) suspendu aux éléments d'extrémité (12) des bras (14) et à déplacer vers l'arrière dans une position de basculement à la suite d'un pivotement des bras (14) et ainsi pour amener de force le conteneur interchangeable (8) dans la position de basculement pendant que le pivotement des bras (14) se poursuit,
- au moins un vérin hydraulique de pivotement (18) faisant office de moyen d'entraînement en pivotement pour les bras (14),
- des vérins hydrauliques télescopiques destinés à faire se déployer et rentrer de manière télescopique les éléments d'extrémité (12) des bras (14), dans lequel les vérins télescopiques sont raccordés à un circuit hydraulique qui leur est affecté afin d'être alimentés en fluide hydraulique,
- des moyens d'entraînement destinés à faire pivoter le crochet basculant (22) autour de l'axe de rabattement (26),
- un dispositif de commande (24) destiné à commander l'au moins un vérin hydraulique de pivotement (18), les vérins hydrauliques télescopiques et les moyens d'entraînement pour le pivotement du crochet basculant (22), et
- un dispositif de commande utilisateur destiné à être actionné par un utilisateur pour régler le mode de fonctionnement souhaité de la multibenne et pour donner des instructions de commande au dispositif de commande (24),
**caractérisé**
**en ce qu'**un dispositif de limitation de pression destiné à être activé au moyen du dispositif de commande (24), de préférence un ensemble soupape de limitation de pression, est prévu dans le circuit hydraulique affecté aux vérins télescopiques et est conçu pour limiter la pression hydraulique maximale dans les vérins télescopiques à une valeur dans le mode basculement du véhicule multibenne qui est réduite par rapport à la valeur de la pression maximale dans les vérins télescopiques pouvant être atteinte dans le mode changement de conteneur.

2. Véhicule multibenne selon la revendication 1, **caractérisé en ce que** le dispositif de limitation de pression est conçu pour limiter la pression hydraulique maximale dans les vérins télescopiques à une valeur prédéfinie faisant partie de la plage de 70 bar à 100 bar, de préférence à 90 bar avec une tolérance de ± 5 bar dans le mode basculement du véhicule multibenne.

3. Véhicule multibenne selon la revendication 1 ou 2, **caractérisé en ce que** le dispositif de commande maintient le dispositif de limitation de pression dans l'état activé uniquement dans le mode basculement.

4. Véhicule multibenne selon l'une quelconque des revendications précédentes, **caractérisé en ce qu'**un dispositif de détection surveillant la position du crochet basculant et communiquant avec le dispositif de commande est prévu sur le véhicule multibenne, dans lequel le dispositif de commande est conçu pour maintenir le dispositif de limitation de pression dans l'état activé aussi longtemps que le dispositif de détection signale que le crochet basculant (22) est dans sa position de capture.

5. Véhicule multibenne selon l'une quelconque des revendications précédentes, **caractérisé en ce que** des moyens d'affichage de mode de fonctionnement sont prévus et conçus pour signaler au dispositif de commande utilisateur de manière acoustique, optique et/ou haptique le mode de fonctionnement respectivement choisi de la multibenne.
